# EUROPÄISCHE PATENTSCHRIFT

(11) **EP 1 110 006 B1**
(45) Veröffentlichungstag und Bekanntmachung des Hinweises auf die Patenterteilung: **16.04.2003**
(21) Anmeldenummer: 99944593.5
(22) Anmeldetag: 03.09.1999
(51) Int. Cl.: F16C 29/08

(54) **LINEARWÄLZLAGER**
LINEAR ROLLING BEARING
PALIER A ROULEMENT LINEAIRE

(30) Priorität: 11.09.1998 DE 19841668
(43) Veröffentlichungstag der Anmeldung: 27.06.2001
(73) Patentinhaber: INA-Schaeffler KG, 91074 Herzogenaurach (DE)
(72) Erfinder: EDER, Jean-Marie, F-67360 Woerth (FR); MENGES, Martin, D-66424 Homburg (DE); SATTLER, Michael, D-66459 Kirkel (DE)
(86) Internationale Anmeldenummer: EP9906481
(87) Internationale Veröffentlichungsnummer: WO00015969

(56) Entgegenhaltungen:
- DE-A- 3 422 444
- DE-A- 4 223 499
- FR-A- 2 442 373
- US-A- 5 575 216

## Beschreibung

### Gebiet der Erfindung

Die Erfindung betrifft ein Linearwälzlager mit einem Führungswagen, der sich mit einem Tragkörper über umlaufende Wälzkörper an einer Führungsschiene abstützt und längs dieser verschiebbar ist, wobei die Führungsschiene zur Befestigung an einer Anschlußkonstruktion in Schienenlängsrichtung hintereinander angeordnete Schraubenbohrungen aufweist, in welche Schrauben einsteckbar sind, und wobei die Wälzkörper jeder Längsseite der Führungsschiene in einem am Tragkörper stirnseitig angeordneten Kopfstück umgelenkt werden und Rücklaufkanäle des Tragkörpers durchlaufen, sowie mit Dichtungsleisten, mit denen die von der Führungsschiene und dem Führungswagen gebildeten Wälzkörperräume nach außen verschlossen sind, wobei die Dichtungsleisten die Führungsschiene mit Dichtlippen berühren.

### Hintergrund der Erfindung

Dichtungsleisten in Linearwälzlagern sind erforderlich, um Verluste des in den Wälzlagerräumen befindlichen Schmierstoffs zu vermeiden und um das Eindringen von Schmutz und Fremdstoffen und dadurch bedingte Beschädigungen im Wälzlagerbereich zu verhindern. Aus dem Dokument EP 0 318 980 A1 ist ein Linearwälzlager bekannt, welches eine von der Unterseite in den Führungswagen eingesetzte einstückige endlose Dichtungsleiste enthält, die in einem ähnlich geformten einstückigen Dichtungsleistenhalter angeordnet und mit diesem in dem Führungswagen befestigt ist. Diese Dichtungsleiste besteht aus zwei die Führungsschiene übergreifenden U-förmigen Frontbereichen, deren Schenkelenden in zwei Verbindungsbereiche übergehen, die als Längsdichtungen an den beiden Längsseiten der Führungsschiene anliegen. Die U-Stege der Frontbereiche liegen an der Oberseite der Führungsschiene an und erstrecken sich dort quer zu dieser als Frontdichtungen. Daher überstreichen sie bei der Bewegung des Führungswagens die hintereinander angeordneten Schraubenbohrungen der Führungsschiene, die für die Befestigung der Führungsschiene an der Anschlußkonstruktion erforderlich sind. Selbst wenn diese Bohrungen beispielsweise durch eingesteckte Stopfen verschlossen sind, können ihre Ränder die darüber hinwegstreichende Dichtlippe der Dichtungsleiste beschädigen, so daß die Abdichtung der von der Führungsschiene und dem Führungswagen gebildeten Wälzkörperräume nicht mehr gewährleistet ist. Eine solche Beschädigung stellt eine häufig auftretende Schadensursache bei Linearwälzlagern dar.

Aus dem Dokument DE 34 22 444 A1 ist ein mit Teleskopeinheit bezeichnetes Linearwälzlager bekannt, bei welchem zwischen den Schenkeln einer U-förmigen Innenschiene und einer U-förmigen Außenschiene jeweils Käfige aus elastisch nachgiebigem Kunststoff angeordnet sind. Die Innenschiene wird entlang der Außenschiene in Längsrichtung hin- und herbewegt. Jeder Käfig ist mit der Innenschiene verbunden und enthält einen Führungskanal mit einer endlosen Kugelreihe. Davon sind Kugeln der Tragreihe in einem durchgehenden Führungsschlitz des Käfigs geführt. Der Rand des Führungsschlitzes ist als diesen umgebende Dichtlippe ausgeführt, welche mit dem Käfig einstückig verbunden ist. Sie berührt den benachbarten Außenschenkel der Außenschiene dicht, während sie auf der Außenschiene bei der hin- und hergehenden Bewegung der Innenschiene gleitet. Da hier die als Führungsschiene des Linearwälzlagers wirkende Außenschiene im Lagerbereich offenbar nicht mit Schrauben an einer Anschlußkonstruktion befestigt ist, kann das Problem der Beschädigung der Dichtlippen beim Überstreifen der Ränder von Schraubenbohrungen nicht auftreten. Außerdem ist bei einem Verschleiß der Dichtlippen auch der Käfig auszuwechseln, da die Dichtlippen mit diesem einstückig ausgeführt sind.

Das Dokument DE 42 23 499 A1 zeigt zwar die Verwendung einer einstückigen endlosen Dichtungsleiste bei einem Rollenumlaufschuh, diese kann aber nur den von einem Tragkörper des Umlaufschuhs und einer Führungsschiene gebildeten Raum abdichten, in welchem die tragenden Wälzkörper an der Oberfläche der Führungsschiene abrollen. Ob und ggf. in welcher Weise auch die Wälzkörper im zugehörigen Rücklaufkanal und in nicht dargestellten, aber erforderlichen Umlenkkanälen nach außen abgedichtet sind, geht aus diesem Dokument nicht hervor.

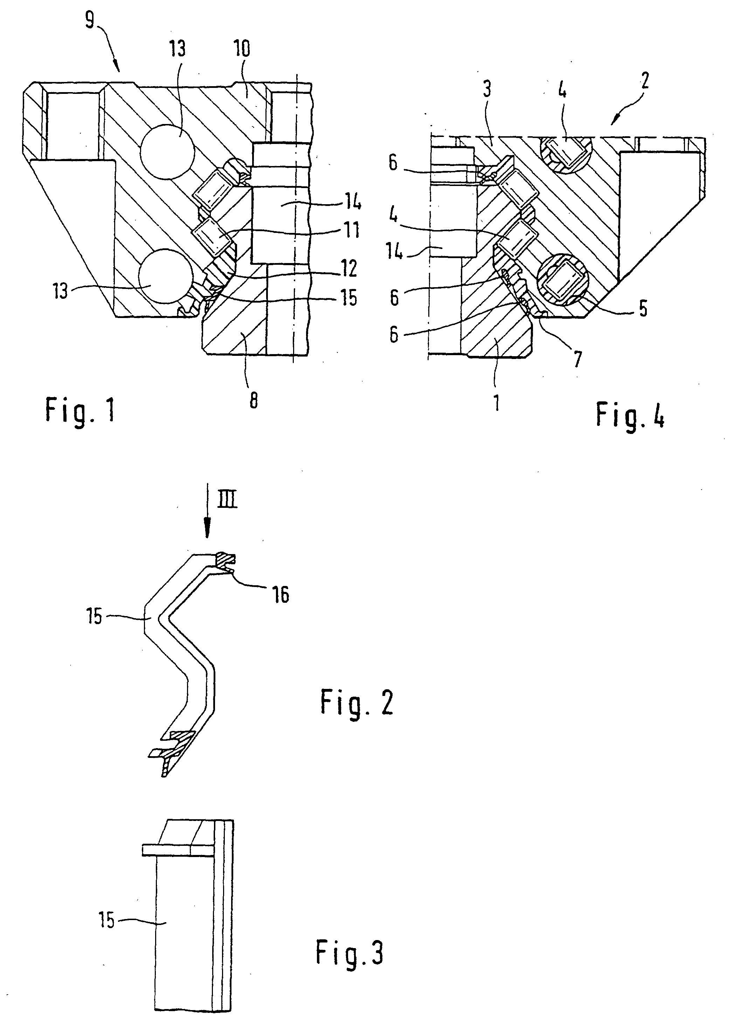

Ein gattungsgemäßes Linear wälzlager ist nachfolgend in Verbindung mit Figur 4 beschrieben.

### Zusammenfassung der Erfindung

Der Erfindung liegt die Aufgabe zugrunde, die Abdichtung des Linearwälzlagers weiterzuentwickeln, so daß im Betrieb Beschädigungen der Dichtlippen vermieden werden.

Diese Aufgabe wird erfindungsgemäß dadurch gelöst, daß in dem Führungswagen zwei einstückige endlose Dichtungsleisten verwendet sind, die auf jeder seite der Führungsschiene in einem an dem Tragkörper angeordneten käfig für die Wälzkörper gehalten sind, wobei jede Dichtungsleiste mit ihrer Dichtlippe außerhalb des Bereichs der hintereinander angeordneten Schraubenbohrungen an der Führungsschiene anliegt und den Wälzkörperraum einer Längsseite der Führungsschiene verschließt. Auf diese Weise kann sich die Dichtung ausschließlich auf die Bereiche der Wälzlager, wie Rollen- oder Kugellagerlaufbahnen, erstrecken, ihre Dichtungsleisten kommen mit den Bereichen der Schraubenbohrungen der Führungsschiene nicht in Berührung, so daß eine Beschädigung der Dichtlippen an Bohrungsrändern nicht möglich ist.

Bei der Verwendung von Führungswagen, die nach dem erfindungsgemäßen Prinzip angeordnete Dichtungsleisten enthalten, kann sogar auf ein Verschließen der Schraubenbohrungen der Führungsschiene verzichtet werden, da hier die Dichtungsleisten ausschließlich im Bereich der Wälzlagerlaufbahnen der Führungswagen die Führungsschiene überstreichen. Neben dem Vorteil der höheren Funktionssicherheit ist damit ein nicht unerheblicher Montagevorteil verbunden.

### Kurze Beschreibung der Zeichnung

Ein Ausführungsbeispiel der Erfindung ist in der Zeichnung dargestellt und wird im folgenden näher beschrieben. Es zeigen:
- Figur 1: ein erfindungsgemäßes Linearwälzlager in einem Teilquerschnitt;
- Figur 2: eine vergrößerte Darstellung des Querschnitts der in Figur 1 erkennbaren Dichtungsleiste;
- Figur 3: eine Draufsicht auf die Dichtungsleiste gemäß Pfeil III der Figur 2;
- Figur 4: ein vorbekanntes Linearwälzlager in einem Figur 1 entsprechenden Teilquerschnitt

### Ausführliche Beschreibung der Zeichnung

Ein vorbekanntes Linearwälzlager gemäß Figur 4 besteht aus einer Führungsschiene 1 und einem Führungswagen 2, der längs der Führungsschiene verschiebbar ist und aus einem Tragkörper 3 mit zwei stirnseitig angesetzten Kopfstücken besteht. Der Tragkörper 3 ist im Querschnitt U-förmig ausgebildet und stützt sich über Wälzkörper 4 mit seinen beiden U-Schenkeln an Laufbahnen der Führungsschiene 1 ab, die an deren beiden Längsseiten angeordnet sind. Die Wälzkörper sind hier Rollen und laufen in vier einzelnen endlosen Umläufen jeweils in einer Tragzone an der Führungsschiene 1 entlang, sie geraten dann in eine in dem jeweiligen Kopfstück ausgebildete Umlenkzone, um schließlich in einem Rücklaufkanal 5 des Tragkörpers 3 zurückzulaufen und in dem anderen Kopfstück wieder in die Tragzone umgelenkt zu werden.

Der von der Führungsschiene 1 und dem Tragkörper 3 gebildete Raum der Wälzkörper auf jeder Seite der Führungsschiene 1 ist durch Längsdichtungsleisten 6 und nicht sichtbare Frontdichtungsleisten nach außen verschlossen. Toleranzbedingt entsteht an den Stoßstellen zwischen den Längsdichtungsleisten und den Frontdichtungsleisten ein Spiel, welches die Wirkung der Dichtung beeinträchtigt. Die Dichtungsleisten 6 sind in einem an dem Tragkörper 3 angeordneten Käfig 7 für die Wälzkörper 4 gehalten.

Das in Figur 1 dargestellte erfindungsgemäße Linearwälzlager ist grundsätzlich ebenso aufgebaut, mit einer Führungsschiene 8, einem Führungswagen 9, der den Tragkörper 10 mit den Wälzkörpern 11 und deren Käfig 12 enthält und der Rücklaufkanäle 13 für die rücklaufenden Wälzkörper 11 aufweist. Wie die Führungsschiene 1 in Figur 4 weist auch die Führungsschiene 8 in Schienenlängsrichtung hintereinander angeordnete Schraubenbohrungen 14 auf, in welche Schrauben zur Befestigung der Führungsschiene an der Anschlußkonstruktion eingesteckt werden können. Erfindungsgemäß ist für jede Längsseite der Führungsschiene 8 eine einstückige, endlose Dichtungsleiste 15 verwendet, die in dem Tragkörper 10 über den Käfig 12 gehalten ist und deren Dichtlippe 16 an der Führungsschiene 8 dichtend anliegt. Dabei gerät ihr an der Oberseite der Führungsschiene 8 anliegender Längenbereich nicht in den Bereich der Schraubenbohrungen 14, so daß eine Beschädigung der Dichtlippe 16 durch den Bohrungsrand nicht erfolgen kann. Auch die Dichtlippenbereiche des hierzu parallelen Längenbereichs der endlosen Dichtungsleiste 15, der an der Seite der Führungsschiene 8 anliegt, und die beiden entsprechend dem Querschnitt der Führungsschiene 8 verlaufenden Verbindungsbereiche geraten mit ihren Dichtlippenbereichen nur auf die glatte Oberfläche der Führungsschiene 8, so daß eine Beschädigungsmöglichkeit aufgrund von Unstetigkeiten der Führungsschienenoberfläche nicht besteht. Erfindungsgemäß sind hier für jede Längsseite der Führungsschiene 8 eine endlose Dichtungsleiste 15, insgesamt also zwei Dichtungsleisten 15 vorgesehen. Diese erstrecken sich nicht in den Bereich der Schraubenbohrungen 14 an der Oberseite der Führungsschiene 8.

### Bezugszahlenliste

- 1: Führungsschiene
- 2: Führungswagen
- 3: Tragkörper
- 4: Wälzkörper
- 5: Rücklaufkanal
- 6: Längsdichtungsleiste
- 7: Käfig
- 8: Führungsschiene
- 9: Führungswagen
- 10: Tragkörper
- 11: Wälzkörper
- 12: Käfig
- 13: Rücklaufkanal
- 14: Schraubenbohrung
- 15: Dichtungsleiste
- 16: Dichtlippe

## Patentansprüche

1. Linearwälzlager mit einem Führungswagen (9), der sich mit einem Tragkörper (10) über umlaufende Wälzkörper (11) an einer Führungsschiene (8) abstützt und längs dieser verschiebbar ist, wobei die Führungsschiene (8) zur Befestigung an einer Anschlußkonstruktion in Schienenlängsrichtung hintereinander angeordnete Schraubenbohrungen (14) aufweist, in welche Schrauben einsteckbar sind, und wobei die Wälzkörper (11) jeder Längsseite der Führungsschiene (8) in einem am Tragkörper (10) stirnseitig angeordneten Kopfstück umgelenkt werden und Rücklaufkanäle (13) des Tragkörpers (10) durchlaufen, sowie mit Dichtungsleisten, mit denen die von der Führungsschiene (8) und dem Führungswagen (9) gebildeten Wälzkörperräume nach außen verschlossen sind, wobei die Dichtungsleisten die Führungsschiene (8) mit Dichtlippen berühren, **dadurch gekennzeichnet, daß** in dem Führungswagen (9) zwei einstückige endlose Dichtungsleisten (15) verwendet sind, die auf jeder Seite der Führungsschiene (8) in einem an dem Tragkörper (10) angeordneten Käfig (12) für die Wälzkörper (11) gehalten sind, wobei jede Dichtungsleiste (15) mit ihrer Dichtlippe (16) außerhalb des Bereichs der hintereinander angeordneten Schraubenbohrungen (14) an der Führungsschiene (8) anliegt und den Wälzkörperraum einer Längsseite der Führungsschiene (8) verschließt.

2. Linearwälzlager nach Anspruch 1, **dadurch gekennzeichnet, daß** die beiden endlosen Dichtungsleisten (15) durch einen Haltesteg, der keine Dichtungsfunktion aufweist, zu einem Bauteil verbunden sind, wobei der Haltesteg an einer Stirnseite des Tragkörpers (10) quer zur Längsrichtung der Führungsschiene (8) verlaufend angeordnet ist.

3. Linearwälzlager nach Anspruch 2, **dadurch gekennzeichnet, daß** an beiden Stirnseiten des Tragkörpers (10) jeweils ein Haltesteg angeordnet ist.

## Claims

1. Linear rolling bearing having a guide carriage (9) that is supported with a carrier body (10) through circulating rolling elements (11) on a guide rail (8) and is displaceable along this guide rail (8) which, for fixing on a connecting structure, comprises threaded bores (14) that are arranged behind one another in the longitudinal direction of the rail and in which screws can be inserted, wherein the rolling elements (11) of each long side of the guide rail (8) are deflected in a head piece arranged on a front end of the carrier body (10) and travel through return channels (13) of the carrier body (10), the linear rolling bearing further comprising sealing strips with which the rolling element spaces formed by the guide rail (8) and the guide carriage (9) are closed in outward direction, the sealing strips being in contact with the guide rail (8) through sealing lips, **characterised in that** two endless, one-piece sealing strips (15) are used in the guide carriage (9) and are retained on each side of the guide rail (8) in a cage (12) for the rolling elements (11) that is arranged on the carrier body (10), each sealing strip (15) bears with its sealing lip (16) against the guide rail (8) outside of the region of the threaded bores (14) arranged behind one another, and each sealing strip (15) closes the rolling element space of one long side of the guide rail (8).

2. Linear rolling bearing according to claim 1, **characterised in that** the two endless sealing strips (15) are joined into a single component by a retaining bar that has no sealing function, the retaining bar being arranged on one front end of the carrier body (10) crosswise to the longitudinal direction of the guide rail (8).

3. Linear rolling bearing according to claim 2, **characterised in that** a retaining bar is arranged on each front end of the carrier body (10).

## Revendications

1. Roulement linéaire ayant un chariot de guidage (9) qui est supporté sur un rail de guidage (8) par un corps de support (10) par l'intermédiaire de corps roulants (11) en circulation, le chariot de guidage (9) étant déplaçable le long dudit rail de guidage (8) qui, pour la fixation à une structure de raccordement, comprend des alésages taraudés (14) qui sont disposés, l'un derrière l'autre, en direction longitudinale du rail et dans lesquels peuvent être insérées des vis, les corps roulants (11) de chaque grand côté du rail de guidage (8) sont renversées dans une pièce de tête agencée sur un côté frontal du corps de support (10) et traversent des canaux de retour (13) du corps de support (10), le roulement linéaire comprenant, en plus, des baguettes d'étanchéité qui ferment vers l'extérieur, les espaces formés pour les corps roulants (11) par le rail de guidage (8) et le chariot de guidage (9), les baguettes d'étanchéité étant en contact avec le rail de guidage (8) par des lèvres d'étanchéité, **caractérisé en ce que** deux baguettes d'étanchéité (15) sans fin faites, chacune, d'un seul tenant sont employées dans le chariot de guidage (9) en étant retenues de chaque côté du rail de guidage (8) dans une cage (12) pour les corps roulants (11) qui est agencée sur le corps de support (10), chaque baguette d'étanchéité (15) s'appuie avec sa lèvre d'étanchéité (16) contre le rail de guidage (8) en dehors de la région des alésages taraudés (14) agencés l'un derrière l'autre, et chaque baguette d'étanchéité (15) ferme l'espace pour les corps roulants (11) d'un des grands côtés du rail de guidage (8).

2. Roulement linéaire selon la revendication 1, **caractérisé en ce que** les deux baguettes d'étanchéité (15) sans fin sont reliées, l'une à l'autre, pour former un seul composant, par une entretoise de retenue qui n'a aucune fonction d'étanchéification, ladite entretoise de retenue étant agencée sur un côté frontal du corps de support (10) en travers de la direction longitudinale du rail de guidage (8).

3. Roulement linéaire selon la revendication 2, **caractérisé en ce qu'**une entretoise de retenue est agencée sur chaque côté frontal du corps de support (10).
